# EUROPEAN PATENT SPECIFICATION

(11) **EP 0 927 597 B1**
(45) Date of publication and mention of the grant of the patent: **06.09.2000**
(21) Application number: 97830565.4
(22) Date of filing: 03.11.1997
(51) Int. Cl.: B23K 26/10, B26F 3/00

(54) **Machine for cutting sheet metal and similar**
Vorrichtung zum Schneiden von Metallplatten und dergleichen
Dispositif pour couper des plaques métalliques et des choses semblables

(43) Date of publication of application: 07.07.1999
(73) Proprietor: RAINER S.r.l., I-40012 Calderara di Reno (Bologna) (IT)
(72) Inventor: Perazzolo, Eugenio, 45100 Rovigo (IT)
(74) Representative: Jorio, Paolo

(56) References cited:
- EP-A- 0 321 686
- EP-A- 0 776 725
- DE-A- 3 026 932

## Description

The present invention relates to a machine for cutting sheet metal and similar.

Currently used sheet metal cutting machines comprise a worktable; a sheet cutting unit (normally using a laser or a water cutter) movable over the worktable; and a sheet handling device for successively positioning the sheet on the worktable, holding the sheet on the worktable as it is cut by the cutting unit, and finally unloading the worked sheet off the worktable.

Known machines also comprise a control unit for so controlling the handling device and the cutting unit as to cut the sheets in series. Naturally, the type of cut made in each sheet depends on how the cutting unit is moved over the worktable by the control unit.

A major drawback of machines of the above type is the low output rate. In fact, the total work time for each sheet is seriously affected by the time taken to position the sheet within the operating area of the cutting unit on the worktable, and to unload the sheet off the worktable once it is cut; which transfer times are at least comparable with the time taken to actually cut the sheet, so that the cutting unit is left idle for large part of the total work time.

According to the machine described in EP-A1-0 321 686 (MESSER GRIESHEIM GMBH), it is known to use two carriage-worktables horizontally movable beneath a laser cutting unit that in succession processes the metal sheets positioned over the two carriage-worktables. This document discloses to provide loading and/or unloading stations and to automatically direct the carriage worktables to such loading and/or unloading stations.

It is an object of the present invention to provide a sheet metal cutting machine designed to ensure greater output per unit of time.

According to the present invention, there is provided a machine for cutting metal sheets as per claim 1.

A non-limiting embodiment of the present invention will be described by way of example with reference to the accompanying drawings, in which:
Figure 1 shows a view in perspective, with parts removed for clarity, of a machine for cutting sheet metal and similar in accordance with the teachings of the present invention;
Figures 2 and 3 show views in perspective, with parts removed for clarity, of respective variations of the Figure 1 machine.

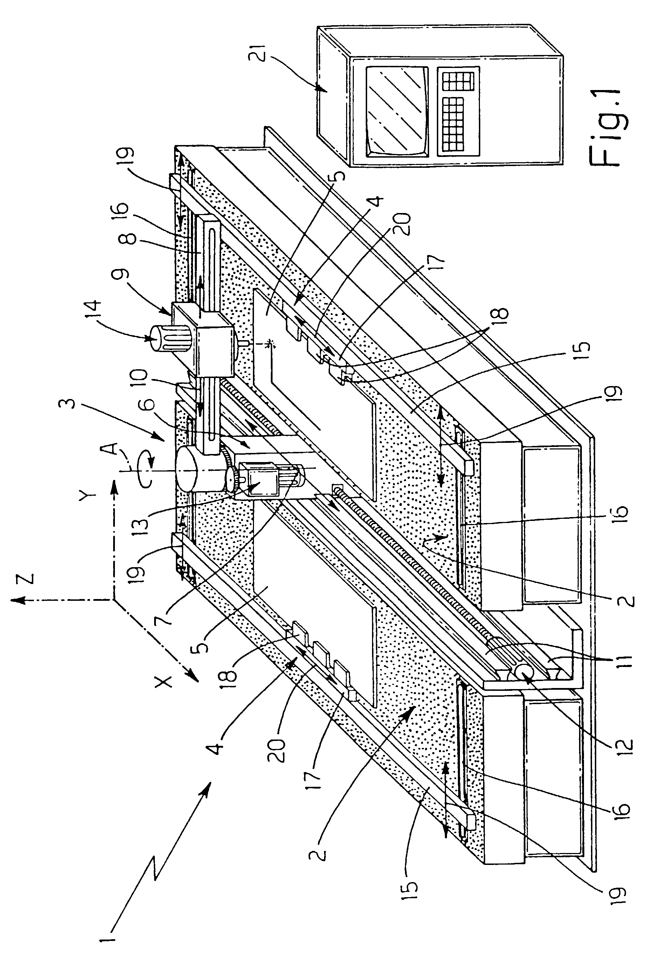

Number 1 in Figure 1 indicates as a whole a machine for cutting sheet metal and similar.

Machine 1 comprises two adjacent worktables 2; a sheet cutting unit 3 movable over both worktables 2; and two sheet handling devices 4, each of which provides for successively positioning a sheet 5 on respective worktable 2, holding sheet 5 on worktable 2 as cutting unit 3 performs the programmed job, and finally unloading the worked sheet 5 off worktable 2.

Cutting unit 3 in turn comprises an upright 6 movable horizontally between the two worktables in a direction 7 parallel to a first horizontal reference axis hereinafter referred to as the X axis; a supporting arm 8 extending from the top end of upright 6 in a direction parallel to a second horizontal reference axis perpendicular to the X axis and hereinafter referred to as the Y axis; and a known cutting head 9 fitted to arm 8 so as to move in a direction 10 parallel to the Y axis to cut sheets 5 using, preferably but not necessarily, a laser beam or water cutter.

As shown in Figure 1, upright 6 slides along a pair of horizontal guides 11 extending in direction 7 between the two worktable 2; and arm 8 is fitted to the top end of upright 6 so as to rotate about a vertical axis A parallel to a third reference axis perpendicular to axes X and Y.

Cutting unit 3 also comprises a first actuating device 12 for moving upright 6 along horizontal guides 11 in direction 7; a second actuating device 13 for rotating arm 8 through 180° about vertical axis A to selectively position cutting head 9 over either of the two worktables 2; and a third actuating device 14 for moving cutting head 9 along arm 8 in direction 10.

Each handling device 4 is movable over respective worktable 2, and comprises a carriage 15 extending parallel to the X axis over worktable 2 and sliding along longitudinal guides 16 extending parallel to the Y axis over a portion of worktable 2; a gripping device 17 sliding along carriage 15 and having a number of grippers 18 for gripping sheets 5; and two actuating devices (not shown) for respectively moving carriage 15 in a direction 19 parallel to the Y axis, and moving gripping device 17 along carriage 15 in a direction 20 parallel to the X axis.

Machine 1 also comprises a control unit 21 for so controlling cutting unit 3 and handling devices 4 as to enable cutting head 9 to work alternately on the two worktables 2.

Operation of machine 1 will now be described, assuming an unworked sheet 5 is stationary on the first worktable 2, beneath cutting head 9, and a worked sheet 5 is stationary on the second worktable 2.

In actual use, control unit 21 moves cutting head 9 over the first worktable 2 to cut the sheet 5 on the first worktable, and at the same time controls the handling device 4 of the second worktable 2 to replace the worked sheet 5 on the second worktable with an unworked sheet 5. Once the sheet 5 on the first worktable 2 has been cut, control unit 21 rotates arm 8 about axis A to position cutting head 9 over the second worktable 2 and so proceed to cut the new sheet 5.

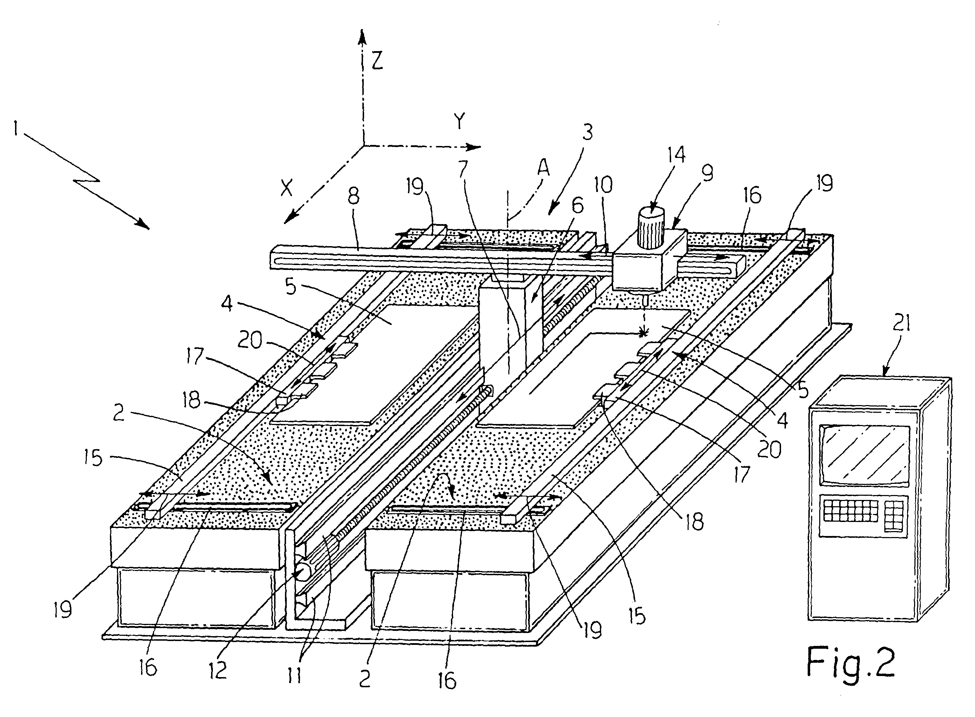

Figure 2 shows a first variation of machine 1, wherein supporting arm 8 is integral with upright 6 and extends, parallel to the Y axis, over both worktables 2; and cutting head 9 is movable along the whole length of arm 8 and therefore positionable over either one of worktables 2.

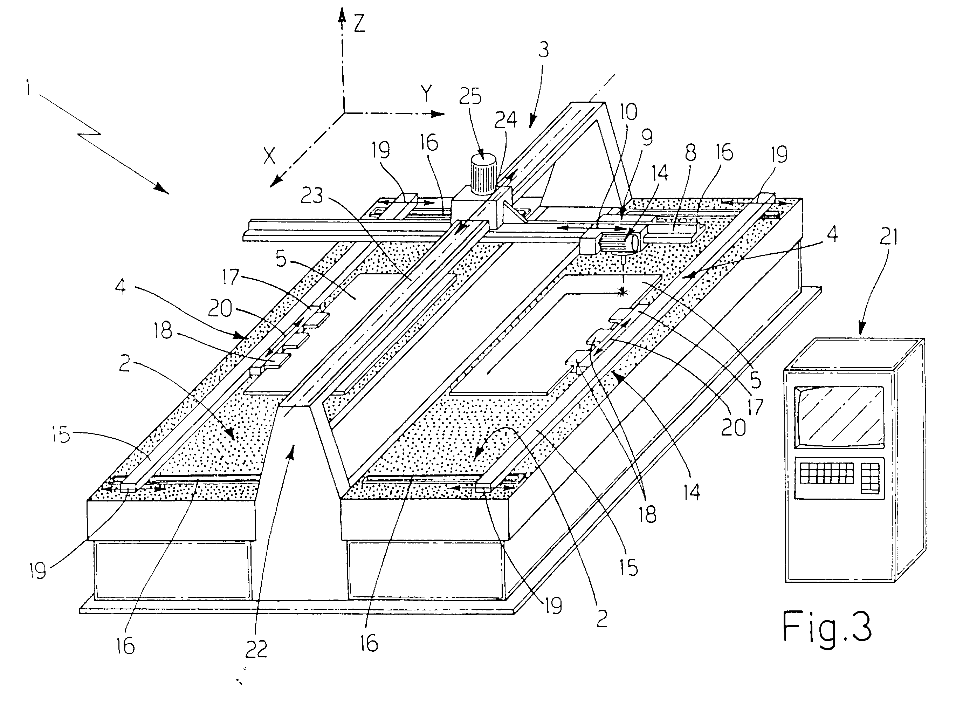

Figure 3 shows a further variation of machine 1, wherein upright 6 is replaced by a gantry 22 fixed between the two worktables 2 and having a crosspiece 23 extending parallel to the X axis; supporting arm 8 extends, parallel to the Y axis, over both worktables 2, and slides along crosspiece 23 in a direction 24 parallel to the X axis; cutting unit 3 comprises an actuating device 25 for moving arm 8 in direction 24; and cutting head 9 is movable along the whole length of arm 8 and therefore positionable over either one of worktables 2.

Machine 1 as described and illustrated herein has the important advantage of overlapping the work cycles of sheets 5 to fully exploit cutting head 9 and so achieve a considerable increase in production output per unit of time.

Clearly, changes may he made to machine 1 as described and illustrated herein without, however, departing from the scope of the present invention as defined by the claims.

## Claims

1. A machine (1) for cutting metal sheets (5); the machine comprising a first and a second worktable (2) one alongside the other, upon each one is positionable at least one metal sheet (5), and a cutting unit (3) comprising at least one cutting head (9) selectively movable over said first or said second worktable (2) to cut the corresponding sheet (5); the machine (1) being characterized by the fact that said cutting unit (3) is movable along fixed guides (11, 23) which are positioned between said first worktable (2) and said second worktable (2), wherein said first worktable (2) comprises a first handling device (4) for positioning at least one sheet (5) on said first worktable (2) and wherein said second worktable (2) comprises a second handling device (4) for positioning at least one sheet (5) on said second worktable (2); the cutting head (9) of said cutting unit (3) being selectively positionable over said first or said second worktable (2) to cut the corresponding sheet (5) while the handling device (4) of the other of said first (2) and second (2) worktables provides for replacing the worked sheet (5) with an unworked sheet (5).

2. A machine as claimed in Claim 1, characterized in that said cutting unit comprises an upright (6) movable between said first (2) and said second worktable (2) in a first direction (7) parallel to a first horizontal reference axis (X); and a supporting arm (8) which is fitted to said upright (6), and extends selectively over said first (2) or said second (2) worktable in a direction parallel to a second horizontal reference axis (Y) perpendicular to said first horizontal reference axis (X); said cutting head (9) being movable along said supporting arm (8) in a second direction (10) parallel to said second horizontal reference axis (Y); and said supporting arm (8) being fitted to said upright (6) so as to rotate about a vertical axis (A) to selectively position it over the first and second worktable (2).

3. A machine as claimed in Claim 2, characterized in that said cutting unit (3) comprises orienting means (13) for selectively rotating said supporting arm (8) through 180° about said vertical axis (A) to alternately position the supporting arm over said first (2) or said second (2) worktable.

4. A machine as claimed in Claim 1, characterized in that said cutting unit comprises an upright (6) movable between said first (2) and said second (2) worktable in a first direction (7) parallel to a first horizontal reference axis (X); and a supporting arm (8) which is fitted to the upright (6), and extends over said first (2) and said second (2) worktable in a direction parallel to a second horizontal reference axis (Y) perpendicular to said first horizontal reference axis (X); said cutting head (9) being movable along said supporting arm (8) in a second direction (10) parallel to said second horizontal reference axis (Y).

5. A machine as claimed in any one of the foregoing Claims from 2 to 4, characterized in that said cutting unit (3) comprises first actuating means (12) for moving said upright (6) in said first direction (7); and second actuating means (14) for moving said cutting head (9) along said supporting arm (8) in said second direction (10).

6. A machine as claimed in Claim 1, characterized in that said cutting unit comprises a gantry (22) located between said first (2) and said second (2) worktable and having a crosspiece (23) parallel to a first horizontal reference axis (X); and a supporting arm (8) fitted to said crosspiece (23) so as to slide in a first direction (24) parallel to a first horizontal reference axis (X); said supporting arm (8) extending parallel to a second horizontal reference axis (Y) perpendicular to said first horizontal reference axis (X); and said cutting head (9) being movable along said supporting arm (8) in a second direction (10) parallel to said second horizontal reference axis (Y).

7. A machine as claimed in Claim 6, characterized in that said cutting unit (3) comprises first actuating means (25) for moving said supporting arm (8) along said crosspiece (23) in said first direction (24); and second actuating means (14) for moving said cutting head (9) along said supporting arm (8) in said second direction (10).

8. A machine as claimed in any one of the foregoing Claims, characterized in that said cutting head (9) uses a laser beam for cutting said sheet (5).

9. A machine as claimed in any one of the foregoing Claims from 1 to 7, characterized in that said cutting head (9) uses a water cutter for cutting said sheet (5).

## Patentansprüche

1. Vorrichtung (1) zum Schneiden von Metalltafeln (5), umfassend: einen ersten und einen zweiten, zueinander längsseits angeordneten Arbeitstisch (2), auf denen je wenigstens eine Metalltafel (5) in Stellung bringbar ist, und eine Schneideinheit (3) mit wenigstens einem Schneidkopf (9), der wahlweise über den ersten oder den zweiten Arbeitstisch (2) hinweg zum Schneiden der entsprechenden Tafel (5) verstellbar ist,
dadurch gekennzeichnet, daß die Schneideinheit (3) an feststehenden Führungen (11, 23) entlang verstellbar ist, die zwischen dem ersten Arbeitstisch (2) und dem zweiten Arbeitstisch (2) angeordnet sind, wobei der erste Arbeitstisch (2) eine erste Handhabungsvorrichtung (4) zum Instellungbringen wenigstens einer Tafel (5) auf dem ersten Arbeitstisch (2) und der zweite Arbeitstisch (2) eine zweite Handhabungsvorrichtung (4) zum Instellungbringen wenigstens einer Tafel (5) auf dem zweiten Arbeitstisch (2) aufweisen, der Schneidkopf (9) der Schneideinheit (3) wahlweise über dem ersten oder dem zweiten Arbeitstisch (2) in Stellung bringbar ist, um die entsprechende Tafel (5) zu schneiden, wogegen die Handhabungsvorrichtung (4) des anderen der beiden Arbeitstische (2) für das Ersetzen der bearbeiteten Tafel (5) durch eine unbearbeitete Tafel (5) sorgt.

2. Vorrichtung nach Anspruch 1,
dadurch gekennzeichnet, daß die Schneideinheit einen Ständer (6), der zwischen dem ersten (2) und dem zweiten Arbeitstisch (2; in einer zu einer ersten waagerechten Bezugsachse (X) parallelen Richtung (7) verstellbar ist, und einer. Tragarm (8) aufweist, der am Ständer (6) angebracht ist und sich wahlweise über den ersten (2) oder den zweiten Arbeitstisch (2) in einer zu einer zweiten waagerechten, zur ersten waagerechten Bezugsachse (X) rechtwinkligen Bezugsachse (Y) parallelen Richtung erstreckt, wobei der Schneidkopf (9) entlang dem Tragarm (8) in einer zweiten, zur zweiten waagerechten Bezugsachse (Y) parallelen Richtung (10) verstellbar ist, und der Tragarm (8) am Ständer (6) so angebracht ist, daß er zu seiner wahlweisen Anordnung über dem ersten und dem zweiten Arbeitstisch (2) um eine senkrechte Achse (A) schwenkbar ist.

3. Vorrichtung nach Anspruch 2,
dadurch gekennzeichnet, daß die Schneideinheit (3) eine Ausrichtevorrichtung (13) zum wahlweisen Schwenken des Tragarms (8) um 180° um die senkrechte Achse (A) zum wechselweisen Instellungbringen des Tragarms über dem ersten (2) oder dem zweiten Arbeitstisch (2) aufweist.

4. Vorrichtung nach Anspruch 1,
dadurch gekennzeichnet, daß die Schneideinheit einen Ständer (6), der zwischen dem ersten (2) und dem zweiten Arbeitstisch (2) in einer zu einer ersten waagerechten Bezugsachse (X) parallelen ersten Richtung (7) verstellbar ist, und einen Tragarm (8) aufweist, der am Ständer (6) angebracht ist und sich über den ersten (2) und den zweiten Arbeitstisch (2) in einer zu einer zweiten waagerechten, zur ersten waagerechten Bezugsachse (X) rechtwinkligen Bezugsachse (Y) parallelen Richtung erstreckt, wobei der Schneidkopf (9) entlang dem Tragarm (8) in einer zweiten, zur zweiten waagerechten Bezugsachse (Y) parallelen Richtung (10) verstellbar ist.

5. Vorrichtung nach einem der vorhergehenden Ansprüche 2 bis 4,
dadurch gekennzeichnet, daß die Schneideinheit (3) eine erste Betätigungsvorrichtung (12) zum Verstellen des Ständers (6) in der ersten Richtung (7) und eine zweite Betätigungsvorrichtung (14) zum Verstellen des Schneidkopfes (9) entlang dem Tragarm (8) in der zweiten Richtung (10) aufweist.

6. Vorrichtung nach Anspruch 1,
dadurch gekennzeichnet, daß die Schneideinheit ein Portal (22), das zwischen dem ersten (2) und dem zweiten Arbeitstisch (2) angeordnet und mit einer zu einer ersten waagerechten Bezugsachse (X) parallelen Traverse (23) versehen ist, und einen an der Traverse (23) in einer ersten, zu einer ersten waagerechten Bezugsachse (X) parallelen Richtung (24) verschiebbar angebrachten Tragarm (8) aufweist, wobei sich der Tragarm (8) parallel zu einer zweiten waagerechten Bezugsachse (Y), die zur ersten waagerechten Bezugsachse (X) rechtwinklig ist, erstreckt, und der Schneidkopf (9) entlang dem Tragarm (8) in einer zweiten, zur zweiten waagerechten Bezugsachse (Y) parallelen Richtung (10) verstellbar ist.

7. Vorrichtung nach Anspruch 6,
dadurch gekennzeichnet, daß die Schneideinheit (3) eine erste Betätigungsvorrichtung (25) zum Verstellen des Tragarms (8) entlang der Traverse (23) in der ersten Richtung (24) und eine zweite Betätigungsvorrichtung (14) zum Verstellen des Schneidkopfes (9) entlang dem Tragarm (8) in der zweiten Richtung (10) aufweist.

8. Vorrichtung nach einem der vorhergehenden Ansprüche,
dadurch gekennzeichnet, daß der Schneidkopf (9) zum Schneiden der Tafel (5) einen Laserstrahl benutzt.

9. Vorrichtung nach einem der vorhergehenden Ansprüche 1 bis 7,
dadurch gekennzeichnet, daß der Schneidkopf (9) zum Schneiden der Tafel (5) ein Wasserstrahl-Schneidgerät benutzt.

## Revendications

1. Machine (1) destinée à découper des plaques métalliques (5) ; la machine comprenant une première et une deuxième table support (2) l'une à côté de l'autre, sur chacune d'entre-elles peut se placer au moins une plaque métallique (5), et un ensemble de découpe (3) comprenant au moins une tête de découpe (9) pouvant se déplacer de manière sélective au-dessus de ladite première ou de ladite deuxième table support (2) afin de découper la plaque correspondante (5) ; la machine (1) étant caractérisée par le fait que l'on place ledit ensemble de découpe (3) pouvant se déplacer le long de guidages rigides (11, 23) entre ladite première table support (2) et ladite deuxième table support (2), dans laquelle ladite première table support (2) comprend un premier dispositif de manipulation (4) destiné à placer au moins une plaque (5) sur ladite première table support (2) et dans laquelle ladite deuxième table support (2) comprend un deuxième dispositif de manipulation (4) destiné à placer au moins une plaque (5) sur ladite deuxième table support (2) ; la tête de découpe (9) dudit ensemble de découpe (3) pouvant se placer de manière sélective au-dessus de ladite première ou de ladite deuxième table support (2) afin de découper la plaque correspondante (5), tandis que le dispositif de manipulation (4) de l'autre parmi lesdites première (2) et deuxième (2) tables supports permet de remplacer la plaque façonnée (5) par une plaque non-façonnée (5).

2. Machine selon la revendication 1, caractérisée en ce que ledit ensemble de découpe comprend un montant (6) pouvant se déplacer entre ladite première (2) et ladite deuxième table support (2) selon une première direction (7) parallèle à un premier axe horizontal de référence (X) ; et un bras de maintien (8) qui se monte audit montant (6), et se déploie de manière sélective au-dessus de ladite première (2) ou de ladite deuxième (2) table support selon une direction parallèle à un deuxième axe horizontal de référence (Y) perpendiculaire audit premier axe horizontal de référence (X) ; ladite tête de découpe (9) pouvant se déplacer le long dudit bras de maintien (8) selon une deuxième direction (10) parallèle audit deuxième axe horizontal de référence (Y) ; et ledit bras de maintien (8) se montant audit montant (6) de façon à tourner autour d'un axe vertical (A) afin de le placer de manière sélective au-dessus de la première et de la deuxième table support (2).

3. Machine selon la revendication 2, caractérisée en ce que ledit ensemble de découpe (3) comprend des moyens d'orientation (13) destinés à faire tourner de manière sélective ledit bras de maintien (8) sur 180° autour dudit axe vertical (A) afin de placer tour à tour le bras de maintien au-dessus de ladite première (2) ou de ladite deuxième (2) table support.

4. Machine selon la revendication 1, caractérisée en ce que ledit ensemble de découpe comprend un montant (6) pouvant se déplacer entre ladite première (2) et ladite deuxième (2) table support selon une première direction (7) parallèle à un premier axe horizontal de référence (X) ; et un bras de maintien (8) qui se monte au montant (6), et se déploie au-dessus de ladite première (2) et de ladite deuxième (2) table support selon une direction parallèle à un deuxième axe horizontal de référence (Y) perpendiculaire audit premier axe horizontal de référence (X) ; ladite tête de découpe (9) pouvant se déplacer le long dudit bras de maintien (8) selon une deuxième direction (10) parallèle audit deuxième axe horizontal de référence (Y).

5. Machine selon l'une des revendications 2 à 4, caractérisée en ce que ledit ensemble de découpe (3) comprend des premiers moyens d'actionnement (12) destinés à faire déplacer ledit montant (6) selon ladite première direction (7) ; et des deuxièmes moyens d'actionnement (12) destinés à faire déplacer ladite tête de découpe (9) le long dudit bras de maintien (8) selon ladite deuxième direction (10).

6. Machine selon la revendication 1, caractérisée en ce que ledit ensemble de découpe comprend une glissière (22) disposée entre ladite première (2) et ladite deuxième (2) table support et possédant une traverse (23) parallèle à un premier axe de référence (X) ; et un bras de maintien (8) monté à ladite traverse (23), de façon à coulisser selon une première direction (24) parallèle à un premier axe horizontal de référence (X) ; ledit bras de maintien (8) se déployant parallèle à un deuxième axe horizontal de référence (Y) perpendiculaire audit premier axe horizontal de référence (X) ; et ladite tête de découpe (9) pouvant se déplacer le long dudit bras de maintien (8) selon une deuxième direction (10) parallèle audit deuxième axe horizontal de référence (Y).

7. Machine selon la revendication 6, caractérisée en ce que ledit ensemble de découpe (3) comprend des premiers moyens d'actionnement (25) destinés à faire déplacer ledit bras de maintien (8) le long de ladite traverse (23) selon ladite première direction (24) ; et des deuxièmes moyens d'actionnement (14) destinés à faire déplacer ladite tête de découpe (9) le long dudit bras de maintien (8) selon ladite deuxième direction (10).

8. Machine selon l'une des revendications précédentes, caractérisée en ce que ladite tête de découpe (9) utilise un faisceau laser destiné à découper ladite plaque (5).

9. Machine selon l'une des revendications 1 à 7, caractérisée en ce que ladite tête de découpe (9) utilise une découpeuse à jet d'eau destinée à découper ladite plaque (5).
